# EUROPEAN PATENT SPECIFICATION

(11) **EP 2 518 451 B1**
(45) Date of publication and mention of the grant of the patent: **23.09.2015**
(21) Application number: 10839360.4
(22) Date of filing: 20.12.2010
(51) Int. Cl.: G01D 5/244, F02D 29/02, F02D 45/00

(54) **ABNORMALITY DETERMINATION DEVICE FOR ROTATION SENSOR**
ABNORMALITÄTSDETEKTOR FÜR EINEN ROTATIONSSENSOR
DISPOSITIF DE DÉTERMINATION D'ANOMALIE POUR CAPTEUR DE ROTATION

(30) Priority: 24.12.2009 JP 2009292732
(43) Date of publication of application: 31.10.2012
(73) Proprietor: TOYOTA JIDOSHA KABUSHIKI KAISHA, Toyota-shi, Aichi-ken, 471-8571 (JP)
(72) Inventor: UCHIDA, Akito, Toyota-shi Aichi-ken 471-8571 (JP); NAKAMURA, Yoshifumi, Toyota-shi Aichi-ken 471-8571 (JP); YOSHIHARA, Masatomo, Toyota-shi Aichi-ken 471-8571 (JP); MASUDA, Satoshi, Kariya-shi Aichi 448-8661 (JP)
(74) Representative: D Young & Co LLP
(86) International application number: PCT/JP2010/072923
(87) International publication number: WO 2011/078130

(56) References cited:
- WO-A1-2006/090890
- DE-A1-102004 061 808
- JP-A- 2002 089 133
- JP-A- 2005 233 622
- JP-A- 2005 233 622
- JP-A- 2007 291 872
- US-A1- 2002 036 475

## Description

### FIELD OF THE INVENTION

The present invention relates to an abnormality determination device that determines the occurrence of an abnormality in a rotation sensor that outputs a pulse signal in accordance with a rotation direction of a rotational body whenever the rotational body is rotated by a predetermined angle.

### BACKGROUND ART

In recent years, to reduce fuel consumption and decrease emission, a control for intermittently stopping the operation of an internal combustion engine when driving a vehicle (automatic stop restart control) has been proposed and applied to hybrid vehicles, which use an internal combustion engine and an electric motor as vehicle driving sources, and vehicles that temporarily stops the operation of the internal combustion engine when stopping at an intersection or the like. In such a vehicle, when the internal combustion engine is automatic stopped by the automatic stop restart control, accurate recognition of the rotational angle of an output shaft of the internal combustion engine allows for engine control, such as fuel injection control, to be correctly performed when the internal combustion engine is subsequent restarted. This properly performs and readily completes the restarting of the internal combustion engine.

The output shaft of the internal combustion engine does not always rotate in the same direction and may temporarily rotate in a direction (reverse direction) opposite to a direction of normal operation (normal direction) when the rotation of the output shaft is being stopped or has been stopped. Thus, when a rotation sensor that detects only the rotational amount is employed as the rotation sensor that detects the rotational angle of the output shaft of the internal combustion engine, reverse rotation of the output shaft cannot be recognized from the output signal of the rotation sensor. This produces a difference between the rotational angle of the output shaft of the internal combustion engine detected by the rotation sensor and the actual rotational angle. Accordingly, in such a case, proper restarting of the internal combustion engine may be hindered.

Thus, for example, Patent Document 1 proposes a rotation sensor that outputs a pulse signal having an output width that differs in accordance with the rotation direction of an output shaft of an internal combustion engine whenever the output shaft is rotated by a predetermined angle.

The rotation sensor of Document 1 includes a disk-shaped signal rotor attached to the output shaft of the internal combustion engine and two sensor portions (first sensor portion and second sensor portion) arranged in the vicinity of the signal rotor. Projections are formed on the outer circumference of the signal rotor at predetermined angular intervals, and the two sensor portions each output a pulse signal whenever a projection of the signal rotor passes by the vicinity of the sensor portion. The sensor portions are set to output pulse signals having phases that are shifted from each other. The rotation sensor outputs a pulse signal corresponding to the signal from each of the sensor portions. An output width of this pulse signal is set to vary depending on relationship between a shift mode of the output signal of the second sensor portion when the output signal shifts (shifts from low signal to high signal [rises] or shifts from high signal to low signal [falls]) and an output value (high signal or low signal) of the first sensor portion. The rotation sensor in Document 1 can recognize the rotational amount of the engine output shaft from the number of pulse signals from the rotation sensor as well as the rotation direction of the engine output shaft from the width of the pulse signal thereby allowing for the rotational angle of the engine output shaft to be accurately obtained while taking into consideration rotation in the reverse direction.

However, when an abnormality such as the breakage of a signal line that transmits the pulse signal occurs in the above rotation sensor, for example, detection of the rotational angle of the output shaft of the internal combustion engine is hindered. Thus, Document 1 proposes an abnormality determination device that determines the occurrence of an abnormality in the rotation sensor. The abnormality determination device of Document 1 detects the voltage level of the pulse signal and determines that the occurrence of an abnormality in the rotation sensor when the pulse signal continues to be a high signal or a low signal for a predetermined time or longer.

### PRIOR ART DOCUMENT

### PATENT DOCUMENT

Patent Document 1: Japanese Laid-Open Patent Publication No. 2005-233622 (pages 5 to 6 and Figs. 2 and 3)

DE 10 2004 061808 relates to a combustion engine control procedure having two toothed, magnetic or optically marked discs with comparison of sensor output with time average pulse length.

### SUMMARY OF THE INVENTION

### PROBLEMS TO BE SOLVED BY THE INVENTION

In the rotation sensor of Patent Document 1, an abnormality in which, for example, the output signal of the first sensor portion does not shift from a certain value (high signal or low signal) may result in a pulse signal being continuously and cyclically output as the output shaft of the internal combustion engine rotates.

In such a case, the reliability of the pulse signal output from the rotation sensor is extremely low, and a deviation in the rotational angle of the output shaft of the internal combustion engine, which is recognized from the pulse signal, from the actual rotational angle cannot be avoided. Thus, it is desirable that the occurrence of the abnormality be detected and properly addressed. However, the abnormality determination device in Patent Document 1 determines the occurrence of an abnormality based on whether the voltage level of the pulse signal has not been shifted for a predetermined time. Thus, the occurrence of such an abnormality cannot be determined.

Such a problem is not limited to a rotation sensor that detects the rotation of an output shaft for an internal combustion engine and may occur in any rotation sensor that detects rotation of any rotational body.

It is an object of the present invention to provide an abnormality determination device that accurately determines the occurrence of an abnormality in a rotation sensor.

### MEANS FOR SOLVING THE PROBLEM

To achieve the above object, one aspect of the present invention provides an abnormality determination device for a rotation sensor that detects rotation of a rotational body. The rotation sensor includes a first sensor portion and a second sensor portion, each outputting a pulse signal having an output width corresponding to one half of a predetermined angle whenever the rotational body is rotated by the predetermined angle. The first and second sensor portions output signals having phases shifted from each other. The rotation sensor outputs a pulse signal when a condition is satisfied where the output signal of the second sensor portion shifts in a state in which the rotation sensor does not output a pulse signal and the output signal of the first sensor portion is a predetermined value. A pulse signal having a first time width is output when a shifting direction of the output signal of the second sensor portion is in a first direction. A pulse signal having a second time width that is longer than the first time width is output when the shifting direction of the output signal of the second sensor portion is in a second direction that is opposite to the first direction. The abnormality determination device includes a calculation unit that calculates a time interval of output initiation times of the pulse signals, and a determination unit that determines that the rotation sensor is abnormal when a difference between two of the time intervals consecutively calculated by the calculation unit is greater than a determination value.

In the above configuration, when an abnormality occurs in which the output signal of the first sensor portion does not shift from a predetermined determination value (for example, a high signal or a low signal), the rotation sensor alternately outputs a pulse signal having the first time width and a pulse signal having the second time width at output timings in intervals of a period (specific period) in which the rotational body rotates one half of the predetermined angle during rotation of the rotational body. When such an abnormality occurs, one of the pulse signal having the first time width and the pulse signal having the second time width is output at the output timing in the specific period interval. Thus, when the rotation speed of the rotation body increases, the pulse width (second time width) of the longer one of the pulse signals may become longer than the specific period. In this case, the first time width is included in the specific period. Thus, the time interval between the output initiation time of the pulse signal having the first time width and the output initiation time of the following pulse signal having the second time width becomes the specific period. In contrast, the second time width becomes longer than the specific period. Thus, the time interval of the output initiation time of the pulse signal having the second time width and the output initiation time of the following pulse signal having the first time width becomes a length of a period obtained by joining a plurality of the specific periods.

In the above configuration, when the difference of the two time intervals consecutively calculated by the calculation unit increases, it can be determined that the output width (second time width) of the pulse signal is longer than the specific period in which the rotational body rotates one half of the predetermined body. From this determination, the occurrence of an abnormality in the rotation sensor can be accurately determined.

It can be determined that the difference is greater than the determination value when the difference is greater than a predetermined determination value or when the ratio of the two time intervals is excluded from a predetermined determination range.

Preferably, the rotational body is an output shaft of an internal combustion engine. The rotation sensor outputs a pulse signal having the first time width as a signal indicating normal rotation of the output shaft and outputs a pulse signal having the second time width as a signal indicating reverse rotation of the output shaft.

In the above configuration, the rotation speed of the output shaft of the internal combustion engine (engine rotation speed) may become high. Thus, the output width of the pulse width is set to have a short width (first time width) so that the output width does not become longer than a predetermined angle even during such high speed rotation. Further, during reverse rotation of the output shaft of the internal combustion engine, the engine rotation speed does not become high, and the possibility of the output width of the pulse signal becoming longer than the predetermined angle is low. Thus, a relatively long width (second time width) is set as the output width of the pulse signal. When an abnormality occurs in such a configuration, during normal rotation of the output shaft of the internal combustion engine, a pulse signal is output with a time width corresponding to that during reverse rotation of the output shaft, that is, with a relatively long second time width. Thus, when the engine rotation speed becomes high, the output width (second time width) of the pulse signal may become longer than the specific period.

In the above configuration, when an abnormality occurs and the engine output shaft rotates in the normal direction, it is determined that the difference is increased when the output width of the pulse signal becomes longer than the specific period due to the output of a pulse signal having the second output width corresponding to that during reverse rotation. Based on such determination, an occurrence of an abnormality in the rotation sensor can be accurately determined.

Preferably, the rotation sensor includes a signal rotor having projections, which are formed on its outer circumference at predetermined angular intervals, and a missing-teeth portion, which is formed by removing some of the projections. The signal rotor is attached to and integrally rotatable with the output shaft. Each of the first sensor portion and the second sensor portion outputs a pulse signal whenever a projection of the signal rotor passes by. The abnormality determination device detects passage of the missing-teeth portion when the difference is greater than the determination value. The determination unit determines that the rotation sensor has an abnormality when the number of times that the missing-teeth detection unit detects passage of the missing-teeth portions is greater than or equal to a threshold value that is greater than the number of the missing-teeth portion during a period in which the pulse signal is output from the rotation sensor for a number of times indicating that the output shaft has rotated once.

In a device that uses a rotation sensor to detect the rotation angle of an engine output shaft, the rotation sensor often detects a reference angle for the rotation angle of the engine output shaft by detecting the passage of a missing-teeth portion, which is arranged on a signal rotor.

The above configuration allows for the detection of the reference angle and the abnormality determination of the rotation sensor to be performed based on a common determination that "the difference is greater than the determination value". This simplifies the control structure.

Preferably, the determination unit determines that the rotation sensor is abnormal under the condition that a rotation speed of the output shaft is greater than or equal to a predetermined speed.

In the above configuration, in a device in which a phenomenon in which the second time width becomes longer than the specific period occurs only in a high engine rotation speed region, erroneous determination that the rotation sensor is abnormal is avoided in a low engine rotation speed region, and the occurrence of an abnormality in the rotation sensor can be accurately determined.

Preferably, the abnormality determination device further includes a control unit and a prohibition unit. The control unit performs automatic stop restart control to automatically stop the internal combustion engine when a predetermined stop condition is satisfied and automatically start the internal combustion engine when a predetermined restarting condition is satisfied. The prohibition unit prohibits execution of the automatic stop restart control when the determination unit determines that an abnormality is occurring in the rotation sensor.

In the above configuration, restarting of the internal combustion engine based on a rotation angle of the output shaft of the internal combustion engine calculated by a rotation sensor having an abnormality, that is, a crank angle having low reliability, can be avoided. This prevents a problem such as starting failure of the internal combustion engine from occurring.

### BRIEF DESCRIPTION OF THE DRAWINGS

Fig. 1 is a schematic diagram showing the structure of a vehicle including an abnormality determination device for rotation sensor according to one embodiment of the present invention.
Fig. 2 is a flowchart showing the procedures in an automatic stopping process executed by the abnormality determination device of Fig. 1.
Fig. 3 is a flowchart showing the procedures in a restarting process executed by the abnormality determination device of Fig. 1.
Fig. 4 is a table showing the relationship of a shift mode of an output signal of a main sensor, an output signal of a sub-sensor, and information on a rotation direction of a crankshaft output from an output device.
Fig. 5 is a timing chart showing one example of the transition of each output signal during normal rotation of the crankshaft.
Fig. 6 is a timing chart showing one example of the transition of each output signal during reverse rotation of the crankshaft.
Fig. 7 is a timing chart showing one example of the transition of each output signal during passage of a missing-teeth portion.
Fig. 8 is a flowchart showing the procedures of a missing-teeth detection process executed by the abnormality determination device of Fig. 1.
Fig. 9 is a timing chart showing one example of the transition of each output signal during occurrence of an abnormality in the rotation sensor.
Fig. 10 is a timing chart showing one example of an execution mode of an abnormality determination process executed by the abnormality determination device of Fig. 1.
Fig. 11 is a flowchart showing the procedures of the abnormality determination process executed by the abnormality determination device of Fig. 1.

### BEST MODE FOR CARRYING OUT THE INVENTION

One embodiment of the present invention will now be described.

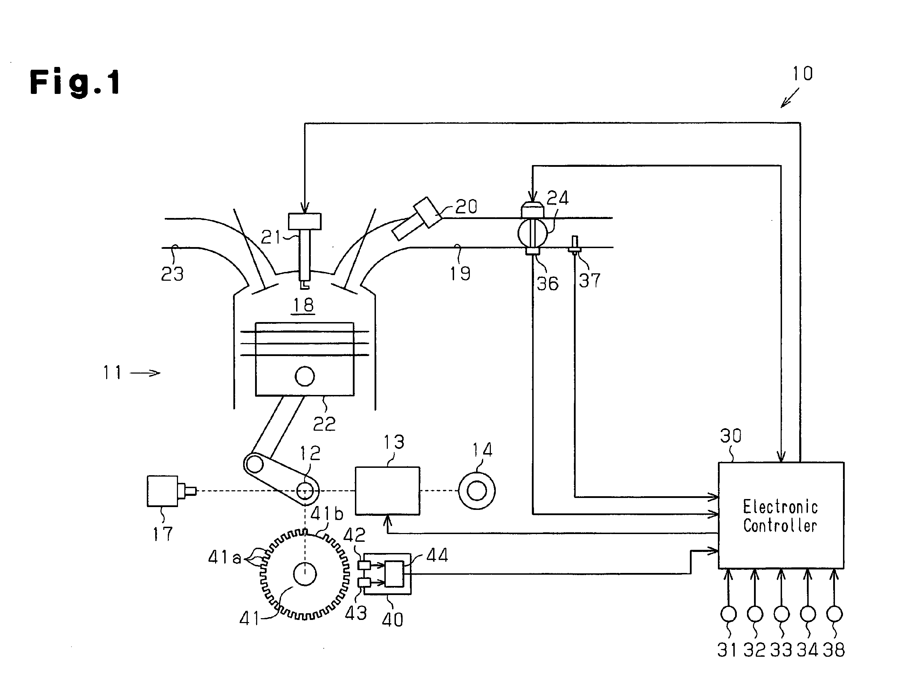

Fig. 1 schematically shows the structure of a vehicle including an abnormality determination device for a rotation sensor 40 in the present embodiment.

As shown in Fig. 1, an internal combustion engine 11, which serves as a driving source, is mounted on a vehicle 10. Driving wheels (not shown) are connected to a crankshaft 12, which is an output shaft of the internal combustion engine 11. Power generated by the internal combustion engine 11 is transmitted to the driving wheels. A starter motor 17 is connected to the crankshaft 12. The starter motor 17 functions as an electric motor when a vehicle occupant operates a switch (not shown) to start the internal combustion engine 11 and when the internal combustion engine 11 is automatically started. In detail, the starter motor 17 forcibly rotates and drives (cranks) the crankshaft 12 of the internal combustion engine 11 and adds auxiliary torque to the crankshaft 12 to start the internal combustion engine 11.

A combustion chamber 18 of the internal combustion engine 11 draws in air through an air intake passage 19 and is supplied with fuel injected from a fuel injection valve 20. Then, an ignition plug 21 ignites an air-fuel mixture formed of the drawn-in air and injected fuel. This burns the air-fuel mixture, reciprocates a piston 22, and rotates the crankshaft 12 of the internal combustion engine 11. The burned air-fuel mixture is discharged as exhaust to an exhaust passage 23 from the combustion chamber 18 of the internal combustion engine 11.

The abnormality determination device of the present embodiment includes an electronic controller 30 that executes various controls to drive the vehicle 10. The electronic controller 30 includes a central processing unit (CPU), which executes various computation processes related to the various controls, a non-volatile memory (ROM), which stores programs and data required for the computation processes, a volatile memory (RAM), which temporarily stores computation results of the CPU, and an input port and output port that input and output a signal from and to the exterior.

Various sensors are connected to the input port of the electronic controller 30. Examples of such sensors include a speed sensor 31, which detects a driving speed SPD of the vehicle 10, an accelerator operational amount sensor 32, which detects the depressing amount of an accelerator pedal (not shown) (accelerator depressing amount AC), and an idle switch 33, which detects whether or not the accelerator pedal is depressed. Examples of the sensors also include a brake switch 34, which detects whether or not a brake pedal (not shown) is depressed, a throttle sensor 36, which detects an open degree (throttle open degree TA) of a throttle valve 24 arranged in the air intake passage 19, and an air amount sensor 37, which detects the amount of air passing through the air intake passage 19 (passage air amount GA). Further, examples of the sensors include a coolant temperature sensor 38, which detects the temperature THW of the coolant in the internal combustion engine 11, and the rotation sensor 40, which detects the rotation speed of the crankshaft 12 (engine rotation speed) and a rotational angle (crank angle "°CA").

The electronic controller 30 recognizes operational states of the internal combustion engine 11, such as the engine rotation speed and an engine load KL, from the output signals of the various sensors. The engine load KL is calculated from the engine rotation speed of the internal combustion engine 11 and the amount of drawn-in air, which is obtained from the accelerator depressing amount AC, the throttle open degree TA, and the passage air amount GA. In accordance with the operational states of the internal combustion engine 11 recognized in this manner, the electronic controller 30 outputs command signals to various driving circuits connected to the output port. In this manner, the electronic controller 30 executes various types of control, such as a control for driving the starter motor 17, a control for operating the fuel injection valve 20 (fuel injection control), a control for operating the ignition plug 21 (ignition timing control), and a control for operating the throttle valve 24 (throttle control).

In order to improve fuel economy and reduce emissions, the vehicle 10 of the present embodiment includes an automatic stop-start function that automatically stops the internal combustion engine 11 when the vehicle 10 stops at an intersection or the like and automatically starts the automatically stopped internal combustion engine 11 at any timing so that the vehicle 10 can start to move.

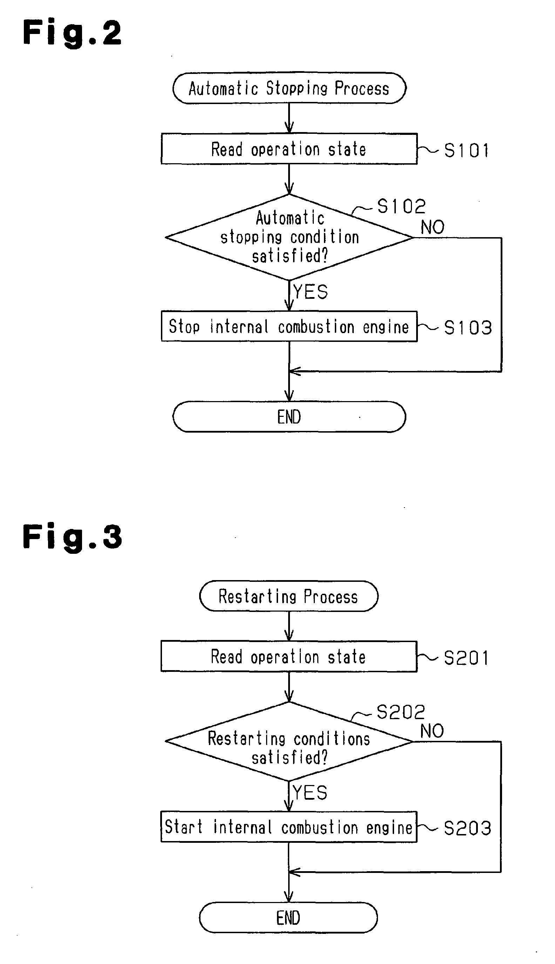

The processing of the automatic stop restart control in the present embodiment will now be described with reference to Figs. 2 and 3. Fig. 2 is a flowchart showing the procedures of a process for automatically stopping the internal combustion engine 11 (automatic stopping process), and Fig. 3 is a flowchart showing the procedures of a process for automatically starting the internal combustion engine 11 (restarting process). The series of processes shown in the flowcharts are executed by the electronic controller 30 as interruption processes in predetermined cycles. In the present embodiment, the electronic controller 30 functions as a control unit that executes the automatic stop restart control and a prohibition unit that prohibits the execution of the automatic stop restart control.

First, referring to Fig. 2, the procedures of the automatic stopping process will be described.

As shown in Fig. 2, in this process, the electronic controller 30 reads the operational states of the vehicle 10 and the internal combustion engine 11 through the output signals of the various sensors (step S101) and determines whether or not automatic stopping conditions have been satisfied based on the operational states (step S102). Specifically, for example, when all of conditions listed below [condition 1] to [condition 5] are satisfied, it is determined that the automatic stopping conditions have been satisfied.
[Condition 1] The warm-up of the internal combustion engine 11 has been completed (the coolant temperature THW is higher than a coolant temperature lower limit value).
[Condition 2] The accelerator pedal is not being depressed (the idle switch is "ON").
[Condition 3] The brake pedal is being depressed (the brake switch is "ON").
[Condition 4] The vehicle 10 is stopped.
[Condition 5] After [Condition 1] to [Condition 4] are all satisfied, there is no history of the automatic stop of the internal combustion engine 11 being performed.

When any one of [condition 1] to [condition 5] is not satisfied (NO in step S102), it is determined that the automatic stopping conditions are not satisfied, that is, the conditions for automatically stopping the internal combustion engine 11 is not satisfied, and the present process is temporarily terminated. Then, when the vehicle 10 stops at an intersection or the like and it is determined that the automatic stopping conditions have been satisfied (YES in step 102), the operation of the internal combustion engine 11 is stopped, for example, by stopping the supply of fuel to the internal combustion engine 11 (step S103). Then, the present process is temporarily terminated.

Next, the procedures of the restarting process will be described with reference to Fig. 3.

As shown in Fig. 3, in this process, first, the electronic controller 30 reads the operational states of the vehicle 10 and the internal combustion engine 11 through the output signals of the various sensors (step S201) and determines whether or not restarting conditions have been satisfied based on the operational states (step S202). Specifically, when any one of the [condition 1] to [condition 4] is not satisfied under the condition that the internal combustion engine 11 is in a state stopped by the automatic stopping process, it is determined that the restarting conditions have been satisfied.

When the internal combustion engine 11 is not automatically stopped or when [condition 1] to [condition 4] are all satisfied (NO in step S202) even through the internal combustion engine 11 is automatically stopped, it is determined that the restarting conditions are not satisfied, that is, the conditions for restarting the internal combustion engine 11 are not satisfied, and the present process is temporarily terminated. Then, when any one of the [condition 1] to [condition 4] becomes unsatisfied in the automatic stop state of the internal combustion engine 11 (YES in step S202), it is determined that the restarting conditions are satisfied and the process for restarting the internal combustion engine 11 is executed (step S203). Specifically, the starter motor 17 is driven to start the cranking operation. In addition, a known fuel injection control and ignition timing control are executed to restart the internal combustion engine 11. Then, the present process is temporarily terminated.

Here, in the vehicle 10 (refer to Fig. 1), accurate recognition of the crank angle of the crankshaft 12 during the automatic stop of the internal combustion engine 11 in the automatic stopping process allows for engine control (fuel injection control, ignition timing control, and so on) to be properly executed when restarting the internal combustion engine 11 in a subsequent restarting process. This properly performs and readily completes the restarting of the internal combustion engine 11.

The crankshaft 12 does not always rotate in the same direction and may temporarily rotate in a direction (reverse direction) opposite to a direction (normal direction) of normal operation of the internal combustion engine 11 when the rotation of the crankshaft 12 is being stopped or has been stopped. Thus, when the employed rotation sensor is one that outputs only a signal corresponding to the rotational amount of the crankshaft 12, the rotation of the crankshaft 12 in the reverse direction cannot be recognized from the output signal of the system. This produces a difference between the crank angle obtained from the output signal of the rotation sensor and the actual crank angle.

In the present embodiment, the employed rotation sensor 40 detects the rotational amount of the crankshaft 12 as well as the rotation direction to output a signal (crank signal NE) corresponding to the detected rotational amount and rotation direction. The electronic controller 30 obtains the crank angle from the crank signal NE to accurately obtain the crank angle taking into consideration of rotation of the crankshaft 12 in the reverse direction.

In the present embodiment, reverse rotation of the crankshaft 12 is a phenomenon that occurs when the crankshaft 12 is stopping or has been stopped. Thus, the electronic controller 30 detects rotation in the reverse direction only during a period in which the phenomenon may occur (specifically, reverse rotation detection period). More specifically, the electronic controller 30 validates a signal that indicates reverse rotation in the output signal of the rotation sensor 40 during the reverse rotation detection period. Further, the electronic controller 30 invalidates a signal indicating reverse rotation during a period other than the reverse rotation detection period. The reverse rotation detection period is set as a period from when a [start condition], which is shown below, is satisfied to when an [end condition], which is shown below, is satisfied.

[Start Condition] Injection of fuel from the fuel injection valve 20 is stopped to automatically stop the internal combustion engine 11, and the engine rotation speed is less than or equal to a predetermined speed (for example, 400 rev/min).

[End Condition] After the starter motor 17 is operated to restart the internal combustion engine 11, the crankshaft 12 is rotated in the normal direction by a predetermined number of rotations (for example, one rotation) or greater.

Next, the specific structure of the rotation sensor 40 and its peripheral members will be described.

A disk-shaped signal rotor 41 that rotates integrally with the crankshaft 12 is attached to the crankshaft 12 of the internal combustion engine 11. Projections 41 a are formed on the outer circumference of the signal rotor 41 at intervals of a predetermined angle (10°CA). The signal rotor 41 includes a so-called missing-teeth portion 41 b obtained where some (two adjacent) projections 41a are missing. The rotation sensor 40 is arranged in the vicinity of the signal rotor 41. The rotation sensor 40 includes two sensors (a main sensor 42 and a sub-sensor 43), which are arranged in the vicinity of the signal rotor 41, and an output device 44, which outputs a signal (crank signal NE) corresponding to changes in the crank angle. In the present embodiment, the main sensor 42 functions as a second sensor portion, and the sub-sensor 43 functions as a first sensor portion.

The main sensor 42 and the sub-sensor 43 each output a pulse signal having a predetermined width (a width corresponding to 5°CA) whenever a projection 41 a of the signal rotor 41 passes by the vicinity of the sensors 42 and 43 as the crankshaft 12 rotates. Further, the main sensor 42 and the sub-sensor 43 are attached at positions where the phases of their output signals are shifted from each other by a predetermined angle (2.5°CA). The output device 44 retrieves the output signals of the main sensor 42 and the sub-sensor 43 to form and output the crank signal NE, which shifts as the crank angle changes, from the output signals.

The crank signal NE is formed based on the concept described below.

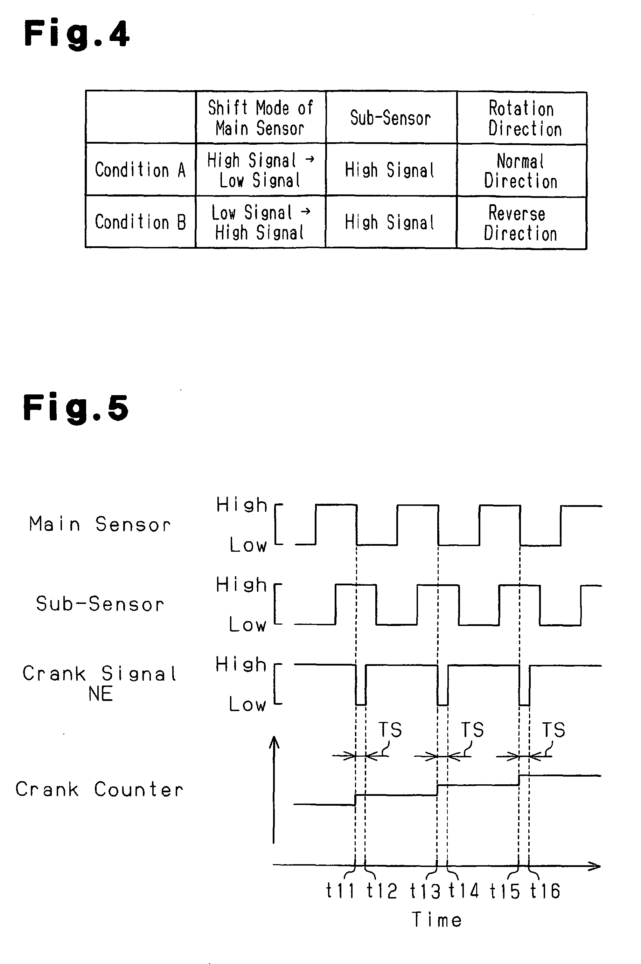

Fig. 4 shows the relationship of a shift mode of the output signal of the main sensor 42 when the output signal shifts, an output signal of the sub-sensor 43, and information on the rotation direction of the crankshaft 12 output from the output device 44.

As shown by [Condition A] in Fig. 4, if the output signal of the sub-sensor 43 is a high signal when the output signal of the main sensor 42 shifts (falls) from a high signal to a low signal, it is detected that the crankshaft 12 has rotated in the normal direction and reached one of the crank angles arranged in the predetermined angular intervals. As shown by [Condition B] in Fig. 4, if the output signal of the sub-sensor 43 is a high signal when the output signal of the main sensor 42 shifts (rises) from a low signal to a high signal, it is detected that the crankshaft 12 has rotated in the reverse direction and reached one of the crank angles arranged in the predetermined angular intervals. In this manner, in the present embodiment, when the condition in which the output signal of the sub-sensor 43 is a high signal and the output signal of the main sensor 42 shifts is satisfied, it is detected that the crankshaft 12 has been rotated by the predetermined angle, and the rotation direction of the crankshaft 12 is detected based on the shifting direction of the output signal of the main sensor 42 when the condition is satisfied.

Then, the crank signal NE is generated and output as described below based on the output signals of the main sensor 42 and the sub-sensor 43.

Fig. 5 shows an example of the relationship of the output signal of the main sensor 42, the output signal of the sub-sensor 43, and the crank signal NE when the crankshaft 12 rotates in the normal direction.

As shown in Fig. 5, when the crankshaft 12 rotates in the normal rotation, whenever the crankshaft 12 is rotated by a predetermined angle (specifically, 10°CA), the condition in which the output signal of the main sensor 42 shifts from a high signal to a low signal in a state in which the output signal of the sub-sensor 43 is a high signal is satisfied (times t11, t13, and t15). Further, the crank signal NE is shifted from a high signal to a low signal for a predetermined time TS (for example, several tens of milliseconds) from timings when [condition A] (refer to Fig. 4) is satisfied (times t11 to t12, t13 to t14, and t15 to t16). When the crankshaft 12 rotates in the normal direction, the engine rotation speed may increase. A short width (the predetermined time TS) is set so that the output width of the pulse signal forming the crank signal NE (output width of low signal) is not longer than the predetermined angle (10°CA) even during such high rotation. In the present embodiment, the pulse signal (low signal) having the output width of the predetermined time TS is output from the rotation sensor 40 as a signal indicating normal rotation of the crankshaft 12, and the predetermined time TS is defined as a first time width.

The electronic controller 30 detects the crank angle by counting the number of the pulse signals forming the crank signal NE and obtaining a value corresponding to the crank angle (specifically, a count value of a crank counter shown in Fig. 5). In this case, whenever the crank signal NE shifts from a high signal to a low signal, the count value of the crank counter is incremented by "1" (times t11, t13, and t15). A larger count value of the crank counter indicates a greater crank angle, and a value corresponding to 720°CA becomes a value corresponding to 0°CA. Further, by detecting the passage of the missing-teeth portion 41 b in a missing-teeth detection process, which will be described later, it is determined that the crank angle has reached a reference angle (for example, 0°CA or 360°CA), and the count value of the crank counter is changed to a value corresponding to the reference angle.

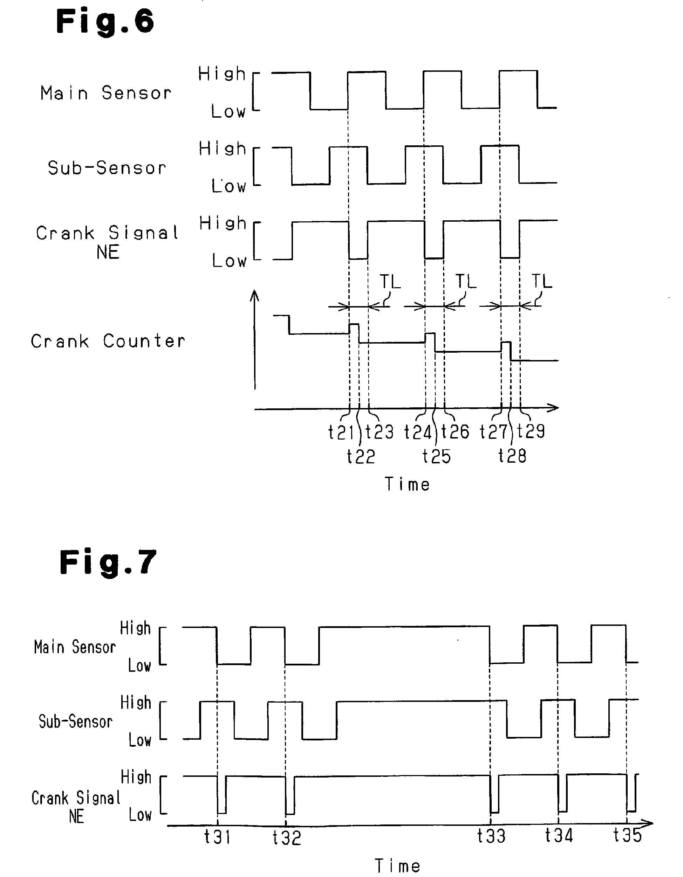

Fig. 6 shows one example of the relationship of the output signal of the main sensor 42, the output signal of the sub-sensor 43, and the crank signal NE when the crankshaft 12 is rotating in the reverse direction.

As shown in Fig. 6, during reverse rotation of the crankshaft 12, whenever the crankshaft 12 is rotated by the predetermined angle (specifically, 10°CA), the condition in which the output signal of the main sensor 42 shifts from a low signal to a high signal when the output signal of the sub-sensor 43 is a high signal is satisfied (times t21, t24, and t27). In this case, the crank signal NE is shifted from a high signal to a low signal for a predetermined time TL from a timing when the above [condition B] (refer to Fig. 4) is satisfied (times t21 to t23, t24 to t26, t27 to t29). A time (for example, several hundreds of milliseconds) that is longer than the predetermined time TS (refer to Fig. 5) when the crankshaft 12 is rotating in the normal rotation is set as the predetermined time TL. During reverse rotation of the crankshaft 12, the engine rotation speed does not become high and the possibility of the output width of the pulse signal (low signal) becoming longer than the predetermined angle (10°CA) is low. Thus, a relatively long width (the predetermined time TL) is set as the output width of the pulse signal (low signal). In the present embodiment, the pulse signal (low signal) having the output width of the predetermined time TL is output from the rotation sensor 40 as a signal indicating reverse rotation of the crankshaft 12, and the predetermined time TL is defined as a second time width.

Further, during reverse rotation of the crankshaft 12, the electronic controller 30 obtains the count value of the crank counter in the following manner. First, when the crank signal NE shifts from a high signal to a low signal, the count value of the crank counter is incremented by "1" (times t21, t24, and t27). Then, when a period during which the crank signal NE is a low signal becomes greater than or equal to a determination value (where, predetermined time TS < determination value < predetermined time TL) (times t22, t25, and t28), it is determined that a pulse width (output width of low signal) of the crank signal NE is a value indicating reverse rotation of the crankshaft 12, and "2" is subtracted from the count value of the crank counter. These series of operations decrement the count value of the crank counter by "1".

Next, the process for detecting that the missing-teeth portion 41 b of the signal rotor 41 has passed by the rotation sensor 40 (the missing-teeth detection process) will be described.

Fig. 7 shows an example of the relationship of the output signal of the main sensor 42, the output signal of the sub-sensor 43, and the crank signal NE during passage of the missing-teeth portion 41 b.

When portions other than the missing-teeth portion 41 b in the signal rotor 41 pass by the vicinity of the rotation sensor 40 as the crankshaft 12 rotates, the projections 41 a of the signal rotor 41 pass by the vicinity of the rotation sensor 40 at intervals of the predetermined angle (10°CA). Thus, as shown in Fig. 7, although there are changes as the engine rotation speed changes, time intervals (times t31 to t32, t33 to t34, t34 to t35) between the timings of the falling edges of the pulse signal (crank signal NE) output from the rotation sensor 40 subtly change within a very short period, and such time intervals are practically the same as a time interval just before or after the time interval.

When the missing-teeth portion 41 b of the signal rotor 41 passes by the vicinity of the rotation sensor 40, the interval between the projections 41 a of the signal rotor 41 (30°CA) is greater than other portions. Thus, the time interval (time t32 to t33) between the timings of the falling edges of the pulse signal (crank signal NE) output from the rotation sensor 40 is greater than the leading time interval (time t31 to t32) or the trailing time interval (time t33 to t34).

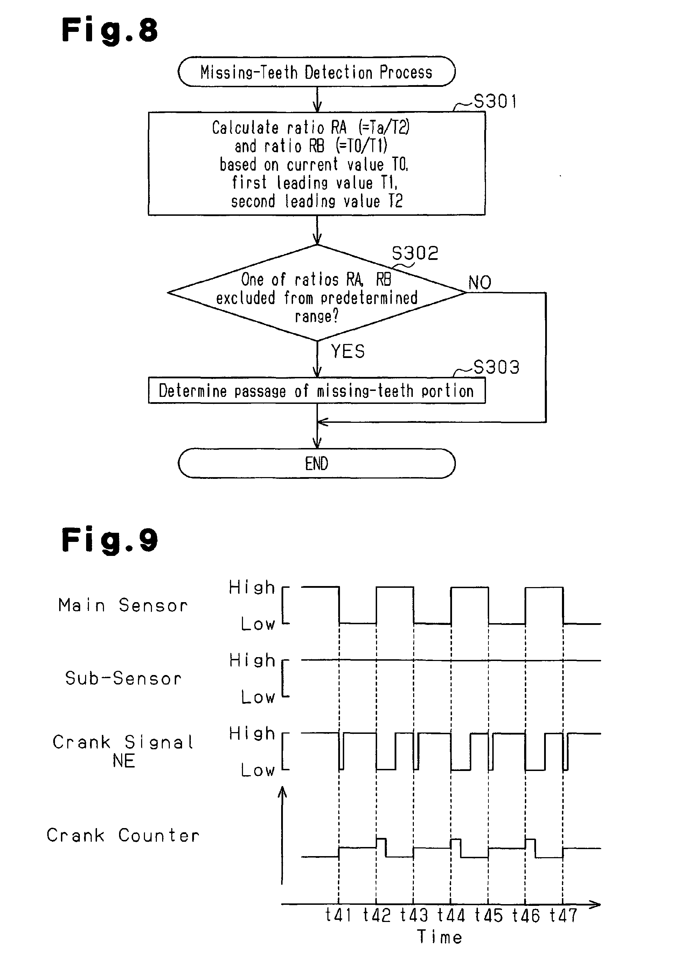

In the present embodiment, in this manner, it is determined that the time interval (low signal generation time interval) between the timings of the falling edges of the pulse signal becomes greater than the leading time interval (or trailing time interval), and the passage of the missing-teeth portion 41 b is detected based on the determination. Next, the missing-teeth detection process will be described in detail with reference to Fig. 8.

Fig. 8 is a flowchart showing the procedures of a missing-teeth detection process, and the series of processes shown in the flowchart is executed by the electronic controller 30, which serves as a missing-teeth detection unit, for every predetermined crank angle (for example, 30°CA). In the present embodiment, the electronic controller 30 detects the passage of the missing-teeth portion 41 b when the difference between two sequentially calculated time intervals is greater than a determination value.

As shown in Fig. 8, in this process, first, with regard to the time interval during an output initiating period of the pulse signal output from the rotation sensor 40, based on a newest value (current value T0), a leading value (first leading value T1), and a second leading value (second leading value T2), a ratio RA (= T1/T2) of the first leading value T1 and the second leading value T2 and a ratio RB (= T0/T1) of the current value T0 and the first leading value T1 are each calculated (step S301). The "time interval during an output initiating period of the pulse signal" refers to the above-mentioned "time interval between the timings of the falling edges of the pulse signal (crank signal NE)" or "low signal generation time interval" and may be referred hereafter as merely "time interval of the pulse signal."

In the present embodiment, in a separate process executed by the electronic controller 30, whenever a pulse signal is input from the rotation sensor 40, that is, at a timing when the crank signal NE falls, the time interval of the output initiation time of the pulse signal is calculated, and the current value T0, the first leading value T1, and the second leading value T2 are stored. In the process of step S301, the current value T0, first leading value T1, and second leading value T2 are used. In the present embodiment, the electronic controller 30 functions as a calculation unit that calculates the time interval of the pulse signal.

After each of the ratios RA and RB is calculated in this manner, it is determined whether or not one of the ratios RA and RB is excluded from a predetermined range (step S302). In the present embodiment, a range that allows for accurate and early detection of the passage of the missing-teeth portion 41 b (in the present embodiment, a range of 0.4 to 2.4) is obtained beforehand from experiments and simulation results and stored in the electronic controller 30.

When either one of the ratios RA and RB is excluded from the predetermined range (YES in step S302), the passage of the missing-teeth portion 41b is detected (step S303). When the ratios RA and RB are both included in the predetermined range (NO in step S302), the passage of the missing-teeth portion 41 b is not detected (process of step S303 is skipped).

As shown in Fig. 9, when an abnormality occurs in which the output signal of the sub-sensor 43 does not shift from a high signal, during normal rotation of the crankshaft 12, signals indicating normal rotation of the crankshaft 12 normally rotates (time t41, t43, t45, t47) and signals indicating reverse rotation of the crankshaft 12 (time t42, t44, t46) are alternately output as the crank signal NE. In this case, the incrementing and decrementing of the count value of the crank counter are alternately repeated. Thus, even though the crankshaft 12 is normally rotating, the count value does not increase. This results in deviation of the actual crank angle from the crank angle detected by the electronic controller 30. As a result, there is a possibility that the restarting of the internal combustion engine 11 cannot be readily completed.

From this point of view, in the present embodiment, an abnormality determination process is executed to determine the occurrence of such an abnormality. The abnormality determination process will be described below.

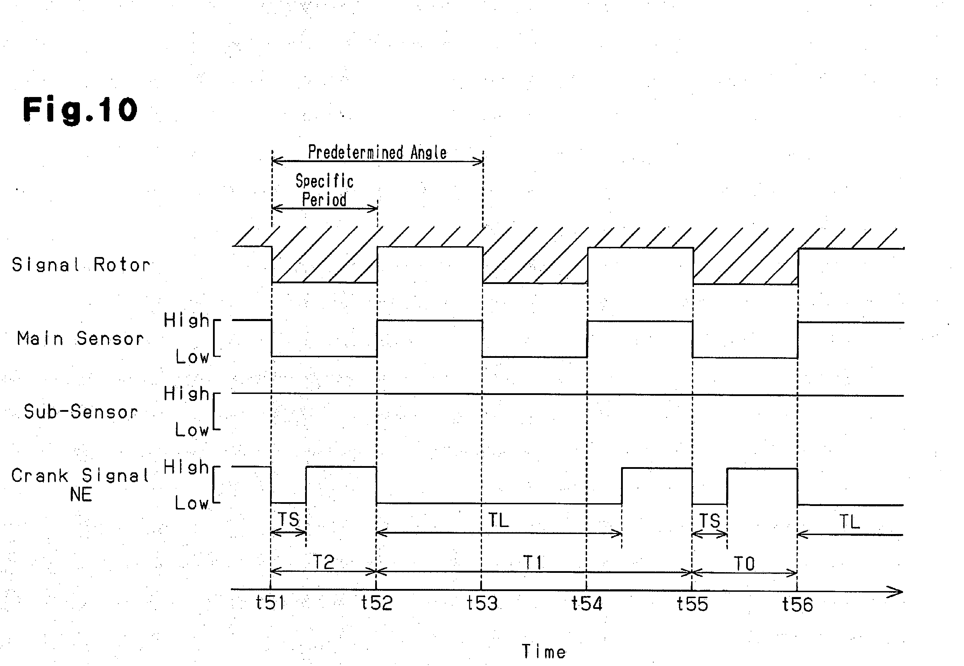

Fig. 10 shows an example of the transitions of the output signal of the main sensor 42, the output signal of the sub-sensor 43, and the crank signal NE when the engine rotation speed becomes high in a state in which an abnormality occurs.

As shown in Fig. 10, when an abnormality occurs in which the output signal of the sub-sensor 43 does not shift from a high signal, during normal rotation of the crankshaft 12, at output timings (times t51, t52, t53, and so on) in each period (specific period) the crankshaft 12 is rotated by one half of the predetermined angle (output interval of the pulse signal when there is no abnormality), a pulse signal (low signal) having a time width indicating normal rotation (predetermined time TS) and a pulse signal (low signal) having a time width indicating reverse rotation (predetermined time TL) are alternately output from the rotation sensor 40.

In this case, when there is no abnormality, in a situation in which the pulse signal is output whenever the crankshaft 12 is rotated by the predetermined angle, either one of the pulse signal having the output width of the predetermined time TS or the pulse signal having the output width of the predetermined time TL is output at the output timing of each specific period. Thus, when the engine rotation speed increases, the output width of the longer one of the pulse signals (specifically, predetermined time TL) becomes longer than the specific period.

Here, in the device of the present embodiment, when the output signal of the main sensor 42 shifts, that is, when [condition A] or [condition B] (refer to Fig. 4) is satisfied, under the condition that the pulse signal is not output from the rotation sensor 40, the pulse signal is output from the rotation sensor 40. A state in which "the pulse signal is not output from the rotation sensor 40" corresponds to a state in which the crank signal NE is a high signal. When [condition A] or [condition B] is satisfied in a situation in which a pulse signal indicating reverse rotation is output from the rotation sensor 40 due to the occurrence of abnormality, the crank signal NE is output from the rotation sensor 40 in the following mode. Specifically, when [condition A] is satisfied once in a situation in which a pulse signal indicating reverse rotation is output, a pulse signal indicating normal rotation is subsequently output (not shown) at a timing in which the output of a pulse signal indicating normal rotation when [condition A] is satisfied and the output of a pulse signal indicating reverse rotation when [condition B] is satisfied are both not performed. When [condition A] and [condition B] are each satisfied once in a situation in which a pulse signal indicating reverse rotation is output, the outputs of pulse signals resulting from these conditions being satisfied are not performed (refer to Fig. 10).

Accordingly, in the device of the present embodiment, when an increase in the engine rotation speed in a state in which an abnormality is occurring results in the output width (predetermined time TL) of a pulse signal indicating reverse rotation being longer than the specific period, the time interval between the output initiation time (time t52) of the pulse signal and the output initiation time (time t55) of the following pulse signal indicating normal rotation becomes a length of a period obtained by joining a plurality of ("3" in the example shown in Fig. 10) specific periods. In contrast, since the output width (predetermined time TS) of the pulse signal indicating normal rotation is included in the specific period, the time interval between the output initiation times (times t51 and t55) of the pulse signal and the following output initiation time (times t52 and t56) of the pulse signal indicating reverse rotation becomes the specific period.

In this manner, in the device of the present embodiment, when the engine rotation speed increases in a state in which an abnormality is occurring, in the same manner as when detecting the passage of the missing-teeth portion 41 b of the signal rotor 41 in the missing-teeth detection process (refer to Fig. 8), the time interval of the timings of falling edges of the pulse signal output from the rotation sensor 40 is longer than the leading and trailing time intervals. Specifically, the time interval (the interval represented by the first trailing value T1 in Fig. 10) between the output initiation time of the pulse signal indicating reverse rotation and the following output initiation time of the pulse signal indicating the normal rotation becomes longer than the leading or trailing time interval (the interval represented by the current value T0 or the interval represented by the second leading value T2 in Fig. 10). From this point of view, in the present embodiment, the occurrence of an abnormality in the rotation sensor 40 is determined based on a detection result of the missing-teeth detection process.

In detail, during a period in which a number of pulse signals indicating that the crankshaft 12 has rotated once are output from the rotation sensor 40, when the number of detections of the passage of the missing-teeth portion 41 b in the missing-teeth detection process is greater than or equal to a threshold value ("12" in the present embodiment), which is greater than the number of the missing-teeth portion 41 ("1" in the present embodiment), it is determined that the rotation sensor 40 has an abnormality.

In this manner, when the time interval of the pulse signal output from the rotation sensor 40 is greater than the leading time interval (or the trailing time interval), it can be determined that the output width of the pulse signal is longer than the specific period, and the occurrence of an abnormality in the rotation sensor 40 can be accurately determined based on the determination.

Moreover, based on a common determination that "the time interval of the pulse signal has become greater than the leading time interval (or the trailing time interval)", specifically, the determination that "the ratios RA and RB are excluded from the predetermined range (process of step S302 in Fig. 8), the passage of the missing-teeth portion 41b can be detected in the missing-teeth detection process and an abnormality in the rotation sensor 40 can be determined in the abnormality determination process. This simplifies the control structure.

The occurrence of an abnormality can be also determined based on an input of a pulse signal having the output width indicating reverse rotation during a determination period in which the crankshaft 12 rotates only in the normal direction. However, when such a determination method is employed and the occurrence of an abnormality is determined only at a timing in which a pulse signal having an output width indicating normal rotation is output, it would be erroneously determined that there is no abnormality in the rotation sensor 40. Further, depending on the interval for executing abnormality determination, there is a possibility that a pulse signal having an output width indicating normal rotation is always output at the execution timing. In such a case, an abnormality of the rotation sensor 40 cannot be determined. In this regard, the device in the present embodiment accurately determines the occurrence of an abnormality in the rotation sensor 40 regardless of the execution timing and execution interval of the abnormality determination.

Depending on the device, when detecting the falling timing and rising timing of a pulse signal output from the rotation sensor with the electronic controller, one of the detection accuracy of the falling timing and the detection accuracy of the rising timing is set to be higher and the other is set to be lower in accordance with the importance of these timings. Normally, the detection accuracy of the timing used as a reference for the detection of rotation of the crankshaft (in the present embodiment, the falling timing) is set to be high and the detection accuracy of the other timing (in the present embodiment, the rising timing) is set to be low. In such a device, when the engine rotation speed increases in a state in which an abnormality occurs and a falling timing and rising timing becomes close, the timing with lower detection accuracy (rising timing) may not be detected. In such a case, the output width of the pulse signal cannot be calculated. In this regard, in the present embodiment, an abnormality in the rotation sensor 40 is determined using only the timing with the higher detection accuracy (falling timing) and the timing with the lower detection accuracy (rising timing) is not used. Thus, the above-mentioned problem is avoided, and an abnormality can be accurately determined.

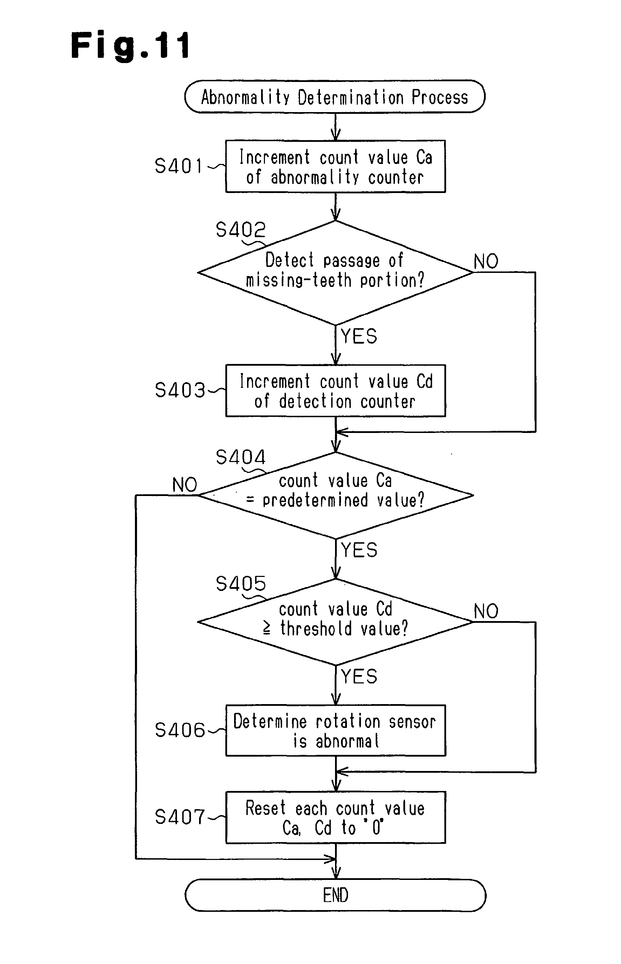

The procedures of an abnormality determination process in the present embodiment will now be described with reference to Fig. 11.

Fig. 11 is a flowchart showing the procedures of the abnormality determination process, and the series of processing shown in this flowchart is executed by the electronic controller 30, which serves as a determination unit, for every predetermined crank angle (for example, 30°CA).

As shown in Fig. 11, in this process, first, a count value Ca of an executing counter is incremented (step S401). Then, it is determined whether or not the passage of the missing-teeth portion 41 b has been detected in the closest missing-teeth detection process (refer to Fig. 8), (step S402). Then, when the passage of the missing-teeth portion 41 b is detected (YES in step S402), a count value Cd of a detecting counter that counts the number of detections is incremented (step S403). When the passage of the missing-teeth portion 41 b is not detected (NO in step S402), the count value Cd of the detecting counter is not incremented (process of step S403 is skipped).

After the count value Cd of the detecting counter is manipulated in such a manner, it is determined whether or not the count value Ca of the executing counter is a predetermined value (a value corresponding to a single rotation of the crankshaft 12 [12 in the present embodiment]) (step S404).

When the count value Ca of the executing counter is less than the predetermined value (NO in step S404), it is determined that the count value Ca is still not a value indicating that the pulse signals output from the rotation sensor 40 has not reached a number indicating a single rotation of the crankshaft 12, and the present process is temporarily terminated without executing the subsequent steps (step S405 to step S407).

Afterward, this process is repeatedly executed, and when the count value Ca of the executing counter reaches the predetermined value (YES in step S404), it is determined whether or not the count value Cd of the detecting counter is greater than or equal to a threshold value ("12" in the present embodiment) (step S405).

Then, when the count value Cd of the detecting counter is greater than or equal to the threshold value (YES in step S405), it is determined that the rotation sensor 40 is abnormal (step S406). When the count value Cd is less than the threshold value (NO in step S405), it is not determined that the rotation sensor 40 is abnormal (process of step S406 is skipped). When the occurrence of an abnormality in the rotation sensor 40 is determined in this manner, the count value Ca of the executing counter and the count value Cd of the detecting counter are reset to "0" (step S407). Then, the present process is temporarily terminated.

In the present embodiment, when it is determined in the abnormality determination process that an abnormality is occurring in the rotation sensor 40 (step S406), a fail-safe process described below is subsequently executed.

In the fail-safe processing of the present embodiment, the execution of the automatic stop restart control is prohibited. More specifically, automatic stopping of the internal combustion engine 11 in the automatic stopping process is prohibited. This prevents restarting of the internal combustion engine 11 based on the crank angle obtained and stored by the electronic controller 30, that is, the crank angle of which reliability is low due to the abnormality of the rotation sensor 40 and avoids problems such as a start failure of the internal combustion engine 11.

Further, manipulation of the count value of the crank counter when the crank signal NE indicating reverse rotation of the crankshaft 12 is output is prohibited. That is, there is a strong possibility that rotation of the crankshaft 12 in the reverse direction cannot be properly detected based on the crank signal NE. Thus, detection of the rotation of the crankshaft 12 in the reverse direction is prohibited. Even when an abnormality occurs in which the output signal of the sub-sensor 43 does not change from a high signal, rotation of the crankshaft 12 in the normal direction can be detected based on a pulse signal having an output width indicating normal rotation in the crank signal NE. Thus, detection of the rotation of the crankshaft 12 in the normal direction is permitted.

In this manner, in the present embodiment, when an abnormality occurs in which an output signal of the sub-sensor 43 does not change from a high signal, the occurrence can be accurately determined. Moreover, by executing fail-safe control based on the determination of the occurrence of an abnormality, the occurrence of the abnormality in the rotation sensor 40 can be properly addressed.

As described above, the present embodiment has the advantages described below.
(1) The time interval of the output initiation times of pulse signals (low signals) is calculated, and when the ratios RA and RB of the two consecutively calculated time intervals are excluded from the predetermined range, it is determined that the rotation sensor 40 is abnormal. Thus, it can be determined that the output width of the pulse signal (low signal) is longer than the specific period. Based on the determination, it can be accurately determined that an abnormality is occurring in the rotation sensor 40.
(2) When an abnormality occurs, during normal rotation of the crankshaft 12, a pulse signal having an output width corresponding to that output during reverse rotation may be output. This would result in the output width of the pulse signal becoming longer than the specific period, the state of which can be determined based on the fact that the ratios RA and RB become excluded from the predetermined range. Then, based on the determination, the occurrence of an abnormality in the rotation sensor 40 can be accurately determined.
(3) During a period in which the pulse signals output from the rotation sensor 40 indicate that the crankshaft 12 has been rotated once, when the number of times the missing-teeth detection process detects the passage of the missing-teeth portion 41 b is greater than or equal to the threshold value, it is determined that the rotation sensor 40 has an abnormality. Thus, the detection of the missing-teeth portion 41 b in the missing-teeth detection process and the determination of an abnormality in the rotation sensor 40 in the abnormality determination process can be performed based on the common determination that "the time interval of the pulse signal has become greater than the leading time interval (or the trailing time interval)". This simplifies the control structure.
(4) When it is determined that the rotation sensor 40 is abnormal, automatic stopping of the internal combustion engine 11 in the automatic stopping process is prohibited. This prevents restarting of the internal combustion engine 11 based on a crank angle having low reliability and prevents a problem such as starting failure of the internal combustion engine 11 from occurring.

The above embodiment may be modified as described below.

The threshold value in the abnormality determination process can be changed to any value as long as it is less than or equal to the number of times the missing-teeth detection process is executed ("12" in the above embodiment) during the period in which the rotation sensor 40 outputs a number of pulse signals indicating a single rotation of the crankshaft 12 and greater than the number of the missing-teeth portion 41 b ("1" in the above embodiment).

The determination of whether the rotation sensor 40 has an abnormality in the abnormality determination process and the abnormality determination process itself may be executed under the condition that the engine rotation speed is greater than or equal to the predetermined speed. In the device of the above embodiment, as apparent from the example of low rotation in Fig. 9 and the example of high rotation in Fig. 10, the phenomenon in which the output interval of the pulse signal becomes longer than the specific period occurs only in a high engine rotation speed operation region. Thus, even when it is determined that the rotation sensor 40 has an abnormality in a low engine rotation speed region during execution of the abnormality determination process, this is likely to be an erroneous determination. The above configuration prevents the rotation sensor 40 from being determined as having an abnormality in the low engine rotation speed region, and the occurrence of an abnormality of the rotation sensor 40 can be determined with high accuracy. In the above configuration, an upper limit speed is obtained beforehand in a speed range in which the phenomenon of the output width of the pulse signal becoming longer than the specific does not occur based on experiments and simulation results, and the upper limit speed may be set as the predetermined speed.

In addition to the abnormality determination process of the present embodiment, an abnormality determination process may be executed that is capable of determining the occurrence of an abnormality in the rotation sensor 40 in at least the low engine rotation speed operation region. This configuration allows for the occurrence of an abnormality in the rotation sensor 40 to be determined even in the low engine rotation speed operation region and enables for early determination of the occurrence of an abnormality. As such an abnormality determination process, for example, a process may be employed to determine that the rotation sensor 40 is abnormal when a pulse signal indicating reverse rotation is output from the rotation sensor 40 during a determination period in which the crankshaft 12 rotates in the normal direction. An alternative process may be employed to determine that the rotation sensor 40 has an abnormality when two pulse signals consecutively output from the rotation sensor 40 in the determination period have different output widths. In a situation in which the crankshaft 12 rotates only in the normal rotation direction, that is, a situation in which the rotation sensor 40 outputs only a pulse signal indicating normal rotation, these processes allow for determination that a pulse signal indicating reverse rotation is output, and based on the determination, it can be properly determined that the rotation sensor 40 has an abnormality. As the determination period during which the crankshaft 12 rotates only in the normal direction, a period in which the starter motor 17 is driven or a period during which the engine rotation speed is greater than or equal to the lower limit speed (for example, 400 rev/min) may be employed.

The determination that the time interval of a pulse signal has become greater than the leading time interval (or the trailing time interval) may be performed in the abnormality determination process instead of the missing-teeth detection process. In a device employing such a configuration, the missing-teeth detection process can be omitted. This configuration can be also applied to an internal combustion engine with a signal rotor that does not include the missing-teeth portion 41 b.

In a device applied to an internal combustion engine with a signal rotor that does not include the missing-teeth portion 41 b and determining whether or not the time interval of a pulse signal is greater than the leading time interval (or trailing time interval) in the abnormality determination process, it is desirable that the number of times the determination is performed be counted to determine that the rotation sensor 40 has an abnormality when the counted number of times is greater than or equal to a predetermined threshold value (value of 2 or greater). In such a configuration, when the above determination is incidentally made due to the effect of noise or the like, the rotation sensor 40 is prevented from being determined as having an abnormality, and an abnormality in the rotation sensor 40 can be determined with high accuracy.

In the above embodiment, as described above, the determination of whether the difference between two consecutively calculated time intervals is greater than the determination value is made when the ratio RA (= T1/T2) of the first leading value T1 and the second leading value T2 and the ratio RB (= T0/T1) of the current value T0 and the first leading value T1 are excluded from the predetermined range. Instead, the determination of whether the difference is greater than the determination value may be made when the difference between the first leading value T1 and the second leading value T2 (absolute value of [T1 - T2]) or a difference between the current value T0 and the first leading value T1 (absolute value of [T1 - T2]) is greater than the predetermined determination value. It is only required that a value highly correlated with the difference between the two time intervals (correlation value) be calculated and a determination value corresponding to the correlation value be set, and that whether or not the difference between the two time intervals is greater than the determination value be determined based on a comparison result between the correlation value and the determination value.

The present invention can be applied to a rotation sensor having any structure as long as [condition C] and [condition D], which are described below, are both satisfied.

[Condition C] A rotation sensor includes a main sensor and a sub-sensor that output pulse signals having an output width corresponding to one half of a predetermined angle whenever the crankshaft is rotated by the predetermined angle, and the main sensor and the sub-sensor output signals having phases that are shifted from each other.

[Condition D] A rotation sensor that outputs a pulse signal if a condition is satisfied in which an output signal of the main sensor shifts when there is no pulse signal output from the rotation sensor and the output signal of the sub-sensor is a predetermined value, outputs a pulse signal having a first time width when the shifting direction of the output signal of the main sensor is in a first direction, and outputs a pulse signal having a second time width that is longer than the first time width when the shifting direction of the output signal of the main sensor is in a second direction that is opposite to the first direction.

Examples of such a rotation sensor include a sensor that outputs a pulse signal having an output width indicating normal rotation if the output signal of the sub-sensor is a low signal when the output signal of the main sensor rises, and outputs a pulse signal having an output width indicating reverse rotation if the output signal of the sub-sensor is a low signal when the output signal of the main sensor falls. When the abnormality determination device according to the present invention is applied to this rotation sensor, the occurrence of an abnormality in which the output signal of the sub-sensor does not shift from a low signal is accurately determined.

The present invention may be applied to a hybrid vehicle including an internal combustion engine and an electric motor as vehicle driving sources in addition to a vehicle including only an internal combustion engine as a vehicle driving source.

The present invention is also applicable to a vehicle that does not execute automatic stop restart control.

## Claims

1. An abnormality determination device for a rotation sensor (40) that detects rotation of a rotational body (12), wherein the rotation sensor includes a first sensor portion (42, 43) and a second senor portion (42, 43), each outputting a pulse signal having an output width corresponding to one half of a predetermined angle whenever the rotational body is rotated by the predetermined angle, the first and second sensor portions output signals having phases shifted from each other, and the rotation sensor outputs a pulse signal when a condition is satisfied where the output signal of the second sensor portion shifts in a state in which the rotation sensor does not output a pulse signal and the output signal of the first sensor portion is a predetermined value, outputs a pulse signal having a first time width when a shifting direction of the output signal of the second sensor portion is in a first direction, and outputs a pulse signal having a second time width that is longer than the first time width when the shifting direction of the output signal of the second sensor portion is in a second direction that is opposite to the first direction, the abnormality determination device **characterized by**:
a calculation unit (30) that calculates a time interval of output initiation times of the pulse signals; and
a determination unit (30) that determines that the rotation sensor is abnormal, wherein
the rotational body is an output shaft of an internal combustion engine (11);
the rotation sensor outputs a pulse signal having the first time width as a signal indicating normal rotation of the output shaft and outputs a pulse signal having the second time width as a signal indicating reverse rotation of the output shaft;
the rotation sensor includes a signal rotor (41) having projections (41 a), which are formed on its outer circumference at predetermined angular intervals, and a missing-teeth portion (41 b), which is formed by removing some of the projections, wherein the signal rotor is attached to an integrally rotatable with the output shaft;
each of the first sensor portion and the second sensor portion outputs a pulse signal whenever a projection of the signal rotor passes by;
the abnormality determination device further comprises a missing-teeth detection unit (30) that detects passage of the missing-teeth portion when a difference between two of the time intervals consecutively calculated by the calculation unit is greater than a determination value; and
the determination unit then determines that the rotation sensor has an abnormality when the number of time that the missing-teeth detection unit detects passage of the missing-teeth portions is greater than or equal to a threshold value that is greater than the number of the missing-teeth portion during a period in which the pulse signal is output from the rotation sensor for a number of times indicating that the output shaft has rotated once.

2. The abnormality determination device according to claim 1, **characterized in that** the determination unit determines that the rotation sensor is abnormal under the condition that a rotation speed of the output shaft is greater than or equal to a predetermined speed.

3. The abnormality determination device according to claim 1 or 2, **characterized by**:
a control unit that performs automatic stop restart control to automatically stop the internal combustion engine when a predetermined stop condition is satisfied and automatically start the internal combustion engine when a predetermined restarting condition is satisfied; and
a prohibition unit that prohibits execution of the automatic stop restart control when the determination unit determines that an abnormality is occurring in the rotation sensor.

## Patentansprüche

1. Abnormitätsbestimmungsvorrichtung für einen Rotationssensor (40), der eine Rotation eines rotierbaren Bauteils (12) erfasst, wobei der Rotationssensor einen ersten Sensorabschnitt (42, 43) und einen zweiten Sensorabschnitt (42, 43) umfasst, von denen jeder ein Pulssignal mit einer Ausgabebreite entsprechend einer Hälfte eines vorbestimmten Winkels ausgibt, wann immer das rotierbare Bauteil um den vorbestimmten Winkel rotiert ist, wobei das erste und zweite Sensorabschnittausgabesignal zueinander verschobene Phasen aufweisen, und der Rotationssensor ein Pulssignal ausgibt, wenn eine Bedingung erfüllt ist, dass das Ausgabesignal des zweiten Sensorabschnitts sich in einem Zustand ändert, in dem der Rotationssensor kein Pulssignal ausgibt und das Ausgabesignal des ersten Sensorabschnitts ein vorbestimmter Wert ist, ein Pulssignal mit einer ersten Zeitbreite ausgibt, wenn eine Änderungsrichtung des Ausgabesignals des zweiten Sensorabschnitts eine erste Richtung ist, und
ein Pulssignal mit einer zweiten Zeitbreite, die länger als die erste Zeitbreite ist, ausgibt, wenn die Änderungsrichtung des Ausgabesignals des zweiten Sensorabschnitts eine zweite Richtung ist, die der ersten Richtung entgegengesetzt ist, wobei die Abnormitätsbestimmungsvorrichtung **gekennzeichnet ist durch**
eine Berechnungseinheit (30), die einen Zeitabschnitt von Ausgabebeginnzeiten der Pulssignale berechnet, und
eine Bestimmungseinheit (30), die bestimmt, dass der Rotationssensor abnorm ist, wobei
das rotierbare Bauteil eine Ausgabewelle einer Brennkraftmaschine (11) ist,
der Rotationssensor ein Pulssignal mit der ersten Zeitbreite als ein Signal ausgibt, das auf eine normale Rotation der Ausgabewelle hinweist, und ein Pulssignal mit der zweiten Zeitbreite als ein Signal ausgibt, das auf eine Rückwärtsrotation der Ausgabewelle hinweist,
der Rotationssensor einen Signalrotor (41) umfasst mit Vorsprüngen (41 a), welche an dessen Außenumfang bei vorbestimmten Winkelintervallen gebildet sind, und mit einem Abschnitt (41b) fehlender Zähne, der **durch** Entfernung einiger der Vorsprünge gebildet ist, wobei der Signalrotor an der Ausgabewelle angebracht und integral mit dieser rotierbar ist,
jeder aus dem ersten Sensorabschnitt und dem zweiten Sensorabschnitt ein Pulssignal ausgibt wann immer ein Vorsprung des Signalrotors vorbeifährt,
die Abnormitätsbestimmungsvorrichtung ferner eine Erfassungseinheit (30) fehlender Zähne aufweist, die ein Vorbeifahren des Abschnitts fehlender Zähne erfasst, wenn eine Differenz zwischen zwei der **durch** die Berechnungseinheit aufeinander folgend berechneten Zeitabschnitte größer als ein Bestimmungswert ist, und
die Bestimmungseinheit dann bestimmt, dass der Rotationssensor eine Abnormität aufweist, wenn die Anzahl von Wiederholungen, mit der die Erfassungseinheit fehlender Zähne ein Vorbeifahren der Abschnitte fehlender Zähne erfasst, größer als oder gleich wie ein Schwellwert ist, der größer ist, als die Anzahl von Abschnitten fehlender Zähne während einer Periode, in der das Pulssignal von dem Rotationssensor für eine Anzahl von Wiederholungen ausgegeben wird, die darauf hinweist, dass die Ausgabewelle einmal rotiert ist.

2. Abnormitätsbestimmungsvorrichtung nach Anspruch 1, ferner **dadurch gekennzeichnet, dass** die Bestimmungseinheit bestimmt, dass der Rotationssensor abnorm ist unter der Bedingung, dass eine Rotationsgeschwindigkeit der Ausgabewelle größer als oder gleich wie eine vorbestimmte Geschwindigkeit ist.

3. Abnormitätsbestimmungsvorrichtung nach Anspruch 1 oder 2, ferner **gekennzeichnet durch**
eine Steuereinheit, die eine Automatik-Anhalte-Neustart-Steuerung durchführt, um die Brennkraftmaschine automatisch anzuhalten, wenn eine vorbestimmte Anhaltebedingung erfüllt ist, und um die Brennkraftmaschine automatisch zu starten, wenn eine vorbestimmte Neustartbedingung erfüllt ist, und
eine Verhinderungseinheit, die eine Ausführung der Automatik-Anhalte-Neustart-Steuerung zu verhindern, wenn die Bestimmungseinheit bestimmt, dass eine Abnormität bei dem Rotationssensor auftritt.

## Revendications

1. Dispositif de détermination d'anomalies destiné à un capteur (40) de rotation qui détecte la rotation d'un corps tournant (12), le capteur de rotation comprenant une première partie (42, 43) de capteur et une deuxième partie (42, 43) de capteur, chacune délivrant un signal pulsé présentant une largeur de sortie correspondant à la moitié d'un angle prédéterminé chaque fois que le corps tournant subit une rotation de l'angle prédéterminé, les signaux de sortie des première et deuxième parties de capteur présentant des phases décalées l'une par rapport à l'autre, et le capteur de rotation délivrant un signal pulsé lorsqu'une condition est satisfaite où le signal de sortie de la deuxième partie de capteur se décale dans un état où le capteur de rotation ne délivre pas un signal pulsé et où le signal de sortie de la première partie de capteur a une valeur prédéterminée, délivre un signal pulsé présentant une première largeur temporelle lorsqu'un sens de décalage du signal de sortie de la deuxième partie de capteur est un premier sens, et outputs un signal pulsé présentant une deuxième largeur temporelle qui est supérieure à la première largeur temporelle lorsque le sens de décalage du signal de sortie de la deuxième partie de capteur est un deuxième sens qui est opposé au premier sens, le dispositif de détermination d'anomalies étant **caractérisé par** :
une unité (30) de calcul qui calcule un intervalle de temps de temps d'amorçage de sortie des signaux pulsés ; et
une unité (30) de détermination qui détermine que le capteur de rotation est en anomalie,
le corps tournant étant un arbre de sortie d'un moteur (11) à combustion interne ;
le capteur de rotation délivrant un signal pulsé présentant la première largeur temporelle en tant que signal indiquant une rotation normale de l'arbre de sortie et délivrant un signal pulsé présentant la deuxième largeur temporelle en tant que signal indiquant une rotation inversée de l'arbre de sortie ;
le capteur de rotation comprenant un rotor (41) de signal doté de protubérances (41a), qui sont formées sur sa circonférence extérieure à des intervalles angulaires prédéterminés, et une partie (41b) à dents manquantes, qui est formée en éliminant certaines des protubérances, le rotor de signal étant fixé de façon à pouvoir tourner solidairement avec l'arbre de sortie ;
chacune de la première partie de capteur et de la deuxième partie de capteur délivrant un signal pulsé chaque fois qu'une protubérance du rotor de signal les franchit ;
le dispositif de détermination d'anomalies comportant en outre une unité (30) de détection de dents manquantes qui détecte le passage de la partie à dents manquantes lorsqu'une différence entre deux des intervalles de temps calculés consécutivement par l'unité de calcul est supérieure à une valeur de détermination ; et
l'unité de détermination déterminant alors que le capteur de rotation présente une anomalie lorsque le nombre de fois où l'unité de détection de dents manquantes détecte le passage des parties à dents manquantes est supérieur ou égal à une valeur seuil qui est supérieure au nombre de la partie à dents manquantes pendant une période au cours de laquelle le signal pulsé est délivré en provenance du capteur de rotation un nombre de fois indiquant que l'arbre de sortie a effectué une rotation.

2. Dispositif de détermination d'anomalies selon la revendication 1, **caractérisé en ce que** l'unité de détermination détermine que le capteur de rotation est en anomalie à la condition qu'une vitesse de rotation de l'arbre de sortie soit supérieure ou égale à une vitesse prédéterminée.

3. Dispositif de détermination d'anomalies selon la revendication 1 ou 2, **caractérisé par** :
une unité de commande qui effectue une commande d'arrêt et de redémarrage automatique pour arrêter automatiquement le moteur à combustion interne lorsqu'une condition prédéterminée d'arrêt est satisfaite et démarrer automatiquement le moteur à combustion interne lorsqu'une condition prédéterminée de redémarrage est satisfaite ; et
une unité d'interdiction qui interdit l'exécution de la commande d'arrêt et de redémarrage automatique lorsque l'unité de détermination détermine qu'une anomalie se produit dans le capteur de rotation.
